# EUROPÄISCHE PATENTSCHRIFT

(11) **EP 2 466 245 B1**
(45) Veröffentlichungstag und Bekanntmachung des Hinweises auf die Patenterteilung: **28.02.2018**
(21) Anmeldenummer: 11191599.7
(22) Anmeldetag: 01.12.2011
(51) Int. Cl.: F41G 1/38, F41G 1/40

(54) **Verstelleinrichtung für optische Systeme**
Adjustment equipment for optical systems
Dispositif de réglage pour systèmes optiques

(30) Priorität: 20.12.2010 DE 102010061349
(43) Veröffentlichungstag der Anmeldung: 20.06.2012
(73) Patentinhaber: Schmidt & Bender GmbH & Co. KG, 35444 Biebertal (DE)
(72) Erfinder: Kern, Stephan, 35619 Braunfels (DE); Schmitt, Christoph, 35444 Biebertal (DE)
(74) Vertreter: Patentanwälte Olbricht Buchhold Keulertz

(56) Entgegenhaltungen:
- DE-A1-102007 050 435
- US-A1- 2006 268 433
- US-A1- 2009 205 461
- US-A1- 2010 175 298
- ANONYMOUS: "Premier Heritage 3-15X50 User Manual", Premier Reticles Ltd , 27. November 2010 (2010-11-27), XP002729837, Gefunden im Internet: URL:https://web.archive.org/web/2010112708 0237/http://premierreticles.com/pdfs/2009- HT3-15xUserManual.pdf [gefunden am 2014-09-16]

## Beschreibung

Die Erfindung betrifft gemäß dem Oberbegriff von Anspruch 1 einen Verstellturm für Zielfernrohre.

Vor allem zu Jagdzwecken aber auch für den militärischen Einsatz wurden Zielfernrohre in den letzten Jahrzehnten weiterentwickelt. Sie bestehen typischer Weise aus einem mattierten Metallgehäuse von allgemein zylindrischer Form, das an den Enden je einen Tubus mit Okular- bzw. Objektiv-Optik und dazwischen eine Umkehranordnung zur Bildaufrichtung aufweist. In diesem mittleren, schmaleren Rohrbereich befindet sich auch ein Absehen, d.h. die bevorzugt in der Objektivbildebene montierte Zielmarke. Zu dessen Justierung dient allgemein eine am mittleren Rohrbereich radial abstehende Stellmechanik, z.B. eine Stellschraube gemäß DE 32 08 814 A1, DE 102007050435 oder DE 37 37 856 A1.

Wichtig ist eine Einstell-Möglichkeit derart, dass Haltepunkt und Treffpunktlage übereinstimmen. Sofern die Zielentfernungen stark schwankend sind, können parallaxe-bedingte Abweichungen der Bildebene des Zieles von der Absehen-Ebene außerordentlich stören. Daher ist ein Parallaxenausgleich unerlässlich. Herkömmlich erfolgt er durch axiales Verschieben der Objektivlinse.

Außerdem können Fertigungstoleranzen und Seitenwind zu seitlichen Abweichungen führen, die mittels einer seitlichen Verstelleinrichtung korrigiert werden müssen.

Zur Verstellung des Absehens sind deshalb außen am Zielfernrohr in Umfangsabständen von 90 Grad wenigstens zwei Verstelltürme befestigt, die jeweils eine Verstelleinrichtung in Form eines Rastrings oder einer Stellkappe haben. Dabei dient ein erster und zweiter Verstellturm der Höhen- bzw. Seitenverstellung.

Beispielsweise ist in DE 297 207 37 U1 ein Zielfernrohr mit einem rohrförmigen Gehäuse beschrieben, das Tubusfassungen für eine Okular- und eine Objektivanordnung aufweist. Dabei sind in einem Mittelrohr eine optische Umkehranordnung und ein diesem zugeordnetes Absehen vorhanden, das am Doppelrohr in einer Fassung fest montiert ist. Ein mit Gewinde versehener Trieb ist in einem Rohrkörperschlitz geführt und drückt gegen eine Federkraft von vorne auf die Umkehranordnung. Er ist in seiner Längsrichtung durch Verdrehen der Verstelleinrichtung vor und zurück bewegbar.

Herkömmlicherweise hat eine derartige, um insgesamt etwa 360 Grad drehbare Verstelleinheit eine feine Rastung solcher Aufteilung, dass es beim Verdrehen (Klickverstellen) jeweils einen Schritt weiter rückt, was die Treffpunklage auf 100 m zum Beispiel um 10 mm verändert. Auf dem Außenumfang des Verstellturms ist eine Skala aufgebracht, an der man tagsüber die vorgenommene Korrektur ablesen kann. Je nach Teilung ist zum Beispiel jeder Klick mit einer weißen Linie markiert, während jeder zehnte Klick durch eine Zahl gekennzeichnet ist.

Für Scharfschützen oder andere spezielle Einsatzzwecke, insbesondere bei Schussweiten von bis zu 2000 m entspricht eine Klickrastung, d.h. ein einzelner Klick, einer Treffpunktversetzung von bis zu 200 mm. Es ist daher notwendig die Einstellposition der Abseheneinrichtung als Schütze genau zu kennen.

Ein Verstellturm für die seitliche Verstellung ist vergleichbar aufgebaut.

Problematisch bei den bekannten Ausführungen im Stand der Technik ist jedoch, dass sich die Abseheneinrichtung bei einer Ortsverlegung des Schützen unbeabsichtigt verstellt. Eine Verstellung kann zum Beispiel dadurch geschehen, dass Kleidungsstücke an einer der Verstelleinrichtung reiben. Deshalb wurden im Stand der Technik verschiedene Vorrichtungen entwickelt, die eine Arretierung der Verstelleinrichtungen ermöglichen.

Um bei Dunkelheit eine gezielte und überprüfbare Einstellung vorzunehmen, muss der Schütze die Anzahl der bei der Einstellung spürbaren Rastvorgänge bis zu einer gewünschten Einstellposition oder Fixierung der Stellvorrichtung haptisch oder sensomotorisch erfassen, d.h., der Benutzer spürt jeden Einrastvorgang und kann anhand der Anzahl der Einrastvorgänge genau zuordnen, welche Einstellung vorliegt. Bei feiner Rasterung und damit verbunden bei einem großen Einstellbereich besteht die Gefahr, dass sich der Benutzer während der Einstellung verzählt und so eine verlässliche Einstellung nicht sichergestellt ist.

Weiterhin ist das Absehen bei Dunkelheit schwer ablesbar. Deshalb besteht bei modernen Jagdzielfernrohren ein Trend hin zu Modellen mit so genanntem Leuchtabsehen. Bei diesen Ausführungen kann ein Teil des Absehens, beispielsweise der Zielpunkt oder ein Zielkreuz, beleuchtet werden, um je nach Anwendung eine Kontrasterhöhung des Absehens, respektive eines Teiles davon, zu erhalten.

Am Markt befindliche Ausführungen werden am Gerät selbst angesteuert, und zwar durch einen kombinierten Ein-/Ausschalter und Helligkeitsregler. Eine derartige Visiervorrichtung ist aus der DE 199 13461 A1 bekannt, wobei in jenem Fall die Beleuchtungseinrichtung als Nachrüstsatz für ein herkömmliches Zielfernrohr mit unbeleuchtetem Absehen ausgebildet ist. Zusätzlich kann mittels der Beleuchtung eine Verstellskala der Parallaxe in der Optik des Zielfernrohrs visualisiert werden, die vom Schützen auch bei Dunkelheit problemlos ablesbar ist. Die Helligkeit der Beleuchtung kann durch die Beleuchtungsverstelleinrichtung an die vorliegenden Lichtverhältnisse angepasst werden.

Zur Betätigung einer solchen Beleuchtungseinrichtung sieht beispielsweise DE 297 20 737 U1 eine Beleuchtungsverstelleinrichtung derart vor, dass ein dritter Verstellturm am Zielfernrohr angeordnet wird.

Weiterhin sind auf dem Markt Verstelltürme von Premier Reticles und Nightforce bekannt, die einen Verstellturm für Zielfernrohre mit zwei Verstelleinrichtungen haben, insbesondere für eine Kombination aus Beleuchtungsverstellung und Parallaxeverstellung.

Modelle von Nightforce verfügen hierbei über Verstelltürme mit einer drehbaren Parallaxe-Verstelleinrichtung und einem EIN-AUS Schalter für die Beleuchtungsverstellung.

Zielfernrohre von Premier Reticles haben einen Verstellturm bestehend aus einer ersten Verstelleinrichtung und einer zweiten Verstelleinrichtung, die relativ zu einer Basis unabhängig von einander drehbar sind, wobei die erste Verstelleinrichtung in einer Verstellposition drehbar ist und eine gegen Verdrehung gesicherte Sicherungsposition aufweist, und die erste Verstelleinrichtung relativ zur Basis derart beschränkt axial bewegbar ist, dass diese in der Verstellposition weiter aus der zweiten Verstelleinrichtung herausragt, als in der Sicherungsposition.

Nachteilig ist diesem Stand der Technik, dass die erste Verstelleinrichtung vom Schützen aus der zweiten Verstelleinrichtung herausgezogen werden muss, um verdreht werden zu können. Dementsprechend muss der Schütze die erste Verstelleinrichtung gut greifen können. Hierfür sieht der Stand der Technik einen Bund vor, der relativ breit ist, damit der Schütze ihn problemlos greifen kann. Dementsprechend steht die erste Verstelleinrichtung auch in der Sicherungsstellung relativ weit hervor. Dennoch gestaltet sich das Herausziehen für den Schützen unkomfortabel. Zudem wird die erste Verstelleinrichtung für die Beleuchtung grundsätzlich nur bei Dunkelheit benötigt und ist durch den Überstand im Hellen eher störend für den Schützen.

Weiterhin ist von Nachteil, dass die erste Verstelleinrichtung nur in einem Drehwinkel, insbesondere der Stellung Beleuchtung-AUS, in die Sicherungsposition gebracht werden kann. Bei erneutem Einschalten der Beleuchtung muss die erste Verstelleinrichtung deshalb wieder bis zur gewünschten Leuchtstärke gedreht werden. In der hierfür benötigten Zeit könnte sich das Zielobjekt aus dem Schussfeld herausbewegt haben.

Zudem wirkt die größere Bauhöhe des Verstellturms beim Hantieren als Hebelarm, und bleibt zudem leichter an Gegenständen, wie einem Baum, einem Stein, oder ähnlichem hängen. Je größer der Hebelarm ist, desto größer ist die Gefahr plastischer Verformungen derart, dass Haltepunkt und Treffpunktlage nicht mehr übereinstimmen.

Es ist daher Aufgabe der Erfindung, einen Verstellturm mit zwei Verstelleinrichtungen zu schaffen, der möglichst kompakt gestaltet ist, um auf das Zielfernrohr einwirkende Hebelkräfte beim Hantieren gering zu halten und dennoch intuitiv und mit einem hohen Maß an Bedienkomfort vom Schützen bedient werden kann. Auch dieser Verstellturm sollte derart gestaltet sein, dass zum Beispiel die Beleuchtung nicht unbeabsichtigt aktiviert oder verstellt, sowie die Optik unbeabsichtigt verstellt wird. Dabei gilt zu beachten, dass die Einstellungen schnell und dennoch präzise durchgeführt werden können und zwar bei Dunkelheit und im Hellen. Zweckmäßigerweise soll der Verstellturm einfach aufgebaut und günstig in der Herstellung, sowie robust und langlebig im Gebrauch sein, und die weiteren Nachteile des Stands der Technik beseitigen.

Hauptmerkmale der Erfindung sind im kennzeichnenden Teil von Anspruch 1 angegeben. Ausgestaltungen sind Gegenstand der Ansprüche 2 bis 10. Die Erfindung betrifft einen Verstellturm für Zielfernrohre gemäß Anspruch 1.

Dabei ist die zweite Verstelleinrichtung in der Regel axialfest relativ zur Basis ausgebildet. Die Basis kann zur Fertigung und Montage aus mehreren Teilen bestehen und auch einen Bereich des Zielfernrohrgehäuses umfassen. Alle Teile der Basis drehen sich jedoch weder bei einer Verdrehung der ersten Verstelleinrichtung noch der zweiten Verstelleinrichtung. Zusätzlich kann die Basis einen Verbindungsdurchgang zum Zielfernrohr aufweisen, um beispielsweise ein Kabel durchzuführen oder eine mechanische Verbindung mit Verstellgliedern herzustellen.

Vorteilhaft ist einer derartigen Ausgestaltung, dass die Betätigungskraft zur Bewegung der ersten Verstelleinrichtung von der Sicherungsposition in die Verstellposition, nicht vom Schützen aufgebracht werden muss. Ein aktives Herausziehen der ersten Verstelleinrichtung entfällt. Stattdessen wird die erste Verstelleinrichtung durch den Kraftspeicher in die Verstellposition bewegt. Dies erhöht den Komfort erheblich.

Die Erfindung ermöglicht zusätzlich eine kompakte Gestaltung des Verstellturms, da kein überstehender Bund vorzusehen ist, den der Schütze greifen muss. Somit ist die Gefahr von Verformungen durch auf das Zielfernrohr einwirkende Hebelkräfte beim Hantieren geringer.

Durch das Versenken der ersten Verstelleinrichtung, ist die zweite Verstelleinrichtung ohne Störfaktoren bedienbar. Zudem stellt die Versenkung einen Mehrwert für einen Schützen dar, der den Komforteindruck des Verstellturms und somit des gesamten Zielfernrohrs steigert.

Ferner sind die Einstellungen der zweiten Verstelleinrichtung intuitiv, schnell und dennoch präzise durchführbar, ohne dass es zu einer versehentlichen Verstellung der ersten Verstelleinrichtung kommt. In der Verstellposition ist zusätzlich auch die erste Verstelleinrichtung schnell und präzise betätigbar. Tagsüber kann die erste Verstelleinrichtung in der Sicherungsposition belassen werden und ist nicht störend. Dagegen kann in der Dunkelheit die erste Verstelleinrichtung bei Bedarf in die Verstellposition oder in die Sicherungsposition gebracht werden.

Die Erfindung erlaubt eine günstig konstruktive Umsetzung, die auch robust und langlebig im Gebrauch auslegbar ist. Vorzugsweise dient die erste Verstelleinrichtung der Einstellung der Beleuchtung eines Absehens oder einer Zielmarkierung mittel Laser und die zweite Verstelleinrichtung der Verstellung der Optik, insbesondere der Parallaxe oder der seitlichen Abweichung.

Die Sicherungsposition kann derart gestaltet werden, dass die Beleuchtung in dieser deaktiviert ist. Somit könnte der Schützen haptisch erfassen ob die Beleuchtung aktiviert oder deaktiviert ist. Es sind jedoch auch andere Belegungen der Schalterstellung realisierbar. Ein weiterer wesentlicher Vorteil der Erfindung ist, dass die erste Bedienvorrichtung in unterschiedlichen Drehwinkeln von der Verstellposition in die Sicherungsposition bewegbar ist. Auch bei einer umgekehrten Bewegung von der Sicherungsposition in die Verstellposition verändert sich der Drehwinkel nicht, sodass zum Beispiel die korrekte Beleuchtungsstärke schnell vorliegt.

Als Kraftspeicher kann eine einfache Druckfeder zwischen Basis und erster Verstelleinrichtung vorgesehen sein. Die Kraft des Kraftspeichers wäre dann in der Sicherungsposition größer als in der Verstellposition. Die Kraft ist dazu geeignet, die erste Verstelleinrichtung entweder in der Sicherungsposition oder der Verstellposition zu halten. Vorzugsweise ist die Kraft in der Verstellposition noch so groß, dass bei einer normalen Drehbewegung der ersten Verstelleinrichtung keine Axialverschiebungen erfolgen, d.h. der Schütze sollte nicht das Gefühl haben die wirkende Kraft wäre schwach. Hierdurch wird der Bedienkomfort erhöht und ein hochwertiger Eindruck vermittelt.

Erfindungsgemäß kann vorgesehen sein, dass Koppelmittel in der Sicherungsposition in Eingriff stehen und vom Kraftspeicher kraftbeaufschlagt sind. Solche Koppelmittel sind geeignet dazu, die erste Verstelleinrichtung in der Sicherungsposition zu fixieren. Sie können derart ausgebildet sein, dass sie entgegen der Kraft des Kraftspeichers einen Hinterschnitt zwischen erster Verstelleinrichtung und Basis bilden. Die Koppelmittel müssen hierfür nicht unmittelbar an Basis und erster Verstelleinrichtung angeordnet sein. Auch ein indirekter Kraftfluss über dritte Teile ist umsetzbar. Durch die Kraftbeaufschlagung wird die erste Verstelleinrichtung in der Sicherungsposition gehalten. Nur durch das Aufbringen einer Betätigungskraft kann die erste Verstelleinrichtung nunmehr aus dieser Position herausbewegt werden.

Zusätzlich kann die Erfindung derart ausgestaltet sein, dass die Koppelmittel in der Verstellposition in Eingriff stehen und vom Kraftspeicher kraftbeaufschlagt sind. Die Koppelmittel sind dann geeignet dazu, die erste Verstelleinrichtung in der Verstellposition zu fixieren. Sie können hierfür derart ausgebildet sein, dass sie entgegen der Kraft des Kraftspeichers einen Hinterschnitt zwischen erster Verstelleinrichtung und Basis bilden. Die Koppelmittel müssen hierfür wiederum nicht unmittelbar an Basis und erster Verstelleinrichtung angeordnet sein. Auch ein indirekter Kraftfluss über dritte Teile ist umsetzbar. Durch die Kraftbeaufschlagung wird die erste Verstelleinrichtung in der Verstellposition gehalten und kann nur durch das Aufbringen einer Betätigungskraft aus dieser Position herausbewegt werden.

Eine Ausführungsform der Erfindung sieht vor, dass die Koppelmittel ein derart ausgebildetes Kurvengetriebe bilden, dass bei Überwindung einer Grenzkraft auf die erste Verstelleinrichtung entgegen der Kraft und anschließender Kraftentlastung, der Kraftspeicher das Kurvengetriebe in eine Endstellung bewegt und dort fixiert.

Dabei können die Endstellungen des Kurvengetriebes mit der Verstellposition und der Sicherungsposition korrelieren. In diesen Endstellungen verbleibt das Kurvengetriebe jeweils bis zur nächsten Betätigung durch den Schützen entgegen der Kraft des Kraftspeichers. Im Zusammenspiel mit dem Kraftspeicher sichert das Kurvengetriebe somit die Verstellposition oder die Sicherungsposition der ersten Verstelleinrichtung.

Dies hat den Vorteil, dass die Betätigungskraft vom Schützen zur Bewegung der ersten Verstelleinrichtung von der Sicherungsposition in die Verstellposition, einfach durch Drücken auf die erste Verstelleinrichtung entgegen der Kraft des Kraftspeichers aufbringbar ist. Ein aktives Herausziehen der ersten Verstelleinrichtung entfällt. Dies erhöht den Komfort erheblich und ein greifbarer Überstand der ersten Verstelleinrichtung ist nicht erforderlich, wodurch der Turm besonders kompakt ist.

Eine weitere Ausführungsform der Erfindung sieht vor, dass das Kurvengetriebe derart ausgebildet ist, dass bei dem Vorliegen einer Verstellposition und einer Überwindung einer Grenzkraft auf die erste Verstelleinrichtung entgegen der Kraft und anschließender Kraftentlastung, der Kraftspeicher die erste Verstelleinrichtung in die Sicherungsposition bewegt und dort fixiert. Zusätzlich kann vorgesehen sein, dass das Kurvengetriebe derart ausgebildet ist, dass bei dem Vorliegen einer Sicherungsposition und einer Überwindung einer Grenzkraft auf die erste Verstelleinrichtung entgegen der Kraft und anschließender Kraftentlastung, der Kraftspeicher die erste Verstelleinrichtung in die Verstellposition bewegt und dort fixiert.

Somit wird wirksam verhindert, dass die erste Verstelleinrichtung ohne eine Betätigung durch den Schützen von einer Position in die andere bewegt wird. Die erste Verstelleinrichtung bleibt vielmehr in der vorgesehen Sicherungsposition, in der eine geringe Turmhöhe vorliegt oder in der vorgesehenen Verstellposition, in der sie drehbar ist.

Besonders vorteilhaft ist eine Ausgestaltung der Erfindung, bei der das Kurvengetriebe an der ersten Verstelleinrichtung angeordnet ist. Somit ist das Kurvengetriebe über möglichst wenig Teile mit der ersten Verstelleinrichtung gekoppelt und der Bedienkomfort für den Schützen wird nicht durch Fertigungstoleranzen beeinträchtigt. Außerdem ist die Anzahl der notwendigen Bauteile für das Kurvengetriebe gering und es entstehen geringe Kosten.

In einer einfach herstellbaren und kostengünstigen Version weist das Kurvengetriebe als Koppelmittel eine Rille auf. Diese könnte unter anderem durch Fräsen oder eine entsprechende Spritzgießform gefertigt werden. Mittels eines solchen Kurvengetriebes sind die Sicherungsposition und die Verstellposition, sowie insbesondere auch die Zwischenbewegungen von der Sicherungs- in die Verstellposition und umgekehrt definierbar. Hierdurch wird der Bedienkomfort erheblich verbessert.

Weiterhin sieht eine Ausgestaltung der Erfindung vor, dass das Kurvengetriebe als Koppelmittel eine mit einem Ring verbundene Getriebeführung aufweist, wobei der Ring derart an der ersten Verstelleinrichtung gelagert ist, dass die Getriebeführung in die Rille eingreift und den Ring kinematisch mit der ersten Verstelleinrichtung verbindet, sodass der Ring und die erste Verstelleinrichtung relativ zueinander beschränkt drehbar und beschränkt axial verschiebbar sind, und wobei der Ring radial drehbar und axialfest relativ zur Basis gelagert ist.

Auf diese Weise werden die erste Verstelleinrichtung und der Ring derart gekoppelt, dass sie im Rahmen des Kurvengetriebes relativ zueinander beschränkt radial drehbar und beschränkt axial verschiebbar sind. Bei einer axialen Verschiebung der ersten Verstelleinrichtung wird der Ring nunmehr über das Kurvengetriebe zu definierten Rotationsbewegungen gezwungen. Ein solcher Ring ermöglicht eine rein axiale Verschiebung der ersten Verstelleinrichtung relativ zur Basis. Zudem kann so das Kurvengetriebe in jedem Drehwinkel der ersten Verstelleinrichtung genutzt werden.

Eine solche Ausgestaltung könnte mit folgenden Funktionen belegt werden: Sofern die radial bewegbare und axialfeste Getriebeführung mit der Rille gekoppelt ist und sich das Kurvengetriebe in der ersten Endstellung befindet, könnte dies der Verstellposition der ersten Verstelleinrichtung entsprechen. Bei einer axialen Bewegung der ersten Verstelleinrichtung entgegen der Kraft des Kraftspeichers, wird das Kurvengetriebe zunächst in eine Zwischenposition überführt. Entlastet der Schütze nunmehr die erste Verstelleinrichtung bewegt die Kraft die Getriebeführung derart, dass das Kurvengetriebe in die zweite Endstellung gelangt. Diese korreliert dann mit der Sicherungsposition der ersten Verstelleinrichtung. Bei einer erneuten Betätigung durch den Schützen durch eine Bewegung entgegen der Kraft des Kraftspeichers, wird das Kurvengetriebe in eine zweite Zwischenposition überführt. Nach Entlastung bewegt die Kraft des Kraftspeichers das Kurvengetriebe zurück in die erste Endstellung und der Schütze kann die erste Verstelleinrichtung verdrehen.

In einer möglichen technischen Ausgestaltung ist vorgesehen, dass die erste Verstelleinrichtung über ein Führungselement mit einer Führungshülse derart gekoppelt ist, dass die Führungshülse relativ zur ersten Verstelleinrichtung axial verschiebbar und radial nicht drehbar ist, wobei die Führungshülse radial drehbar und axialfest relativ zur Basis gelagert ist. Insbesondere ist das Führungselement z.B. als Bolzen oder Stift ausgeführt, der entweder mit der Führungshülse oder mit der ersten Verstelleinrichtung verbunden ist und in einen Führungsschlitz im anderen Teil eingreift. Sofern der Führungsschlitz auf einer Seite geschlossen ist, bildet er durch den Anschlag eine Hubbegrenzung. Somit ist die relative axiale Verschiebbarkeit begrenzt. Eine solche Ausgestaltung trägt durch konstruktiv einfach umsetzbare Bauteile zur axialen Bewegbarkeit der ersten Verstelleinrichtung bei. Die Kosten sind somit niedrig.

Dadurch, dass die Führungshülse radial drehbar und axialfest relativ zur Basis gelagert ist, kann sich die Führungshülse mit der ersten Verstelleinrichtung mitdrehen. Eine solche drehbare Führungshülse ermöglicht nunmehr eine definierte axiale Bewegung der ersten Verstelleinrichtung. Zudem können an der Führungshülse weitere Bauteile angeordnet werden, die sich zwar mit der ersten Verstelleinrichtung drehen, jedoch keine axiale Verschiebung relativ zur Basis durchführen sollen. Solche Bauteile wären beispielsweise eine Batterie oder ein Teil eines Potentiometers.

Besonders vorteilhaft ist eine Gestaltung derart, dass die erste Verstelleinrichtung in der Sicherungsposition über Arretiermittel mit der Basis in Eingriff steht.

Somit ist ein Drehen der ersten Verstelleinrichtung in der Sicherungsposition ausgeschlossen. Dies erlaubt auch eine Gestaltung derart, dass die Verstelleinrichtung leicht aus der zweiten Verstelleinrichtung herausragt. Dies ist insbesondere dann von Vorteil, wenn die erste Verstelleinrichtung einen Deckel aufweist, der zum Beispiel zum Ersetzen einer Batterie im Inneren der ersten Bestellvorrichtung aufgedreht werden muss. Der Rest der ersten Verstelleinrichtung ist dann gegen Verdrehung gesichert und der Deckel kann abgeschraubt werden, ohne dass sich der Rest mitdreht. Da das Austauschen der Batterie nur selten durchzuführen ist, ist ein schmaler Bund hierfür ausreichend, wohingegen er für regelmäßige Betätigungen der ersten Verstelleinrichtung inakzeptabel wäre.

Eine Ausführungsform der Erfindung sieht vor, dass das Arretiermittel Raststufen hat. Dies ist besonders vorteilhaft, da die erste Verstelleinrichtung hierdurch in mehreren Drehwinkeln und somit z.B. bei unterschiedlichen definierten Beleuchtungsstärken in die Sicherungsposition gebracht werden kann. So könnten beispielsweise zwölf Raststufen vorgesehen sein, wovon elf unterschiedliche Helligkeitsstufen bilden und die zwölfte eine Deaktivierung der Beleuchtung ist. Zusätzlich kann die Sicherungsposition mit einer Deaktivierungsfunktion der Beleuchtung belegt werden. Jede dieser Raststufen böte in der Sicherungsposition Schutz vor einer versehentlichen Verstellung und/oder Aktivierung der Beleuchtung.

Eine Konstruktive Gestaltung könnte vorsehen, dass das Arretiermittel wenigstens ein einseitig geöffneter Schlitz in der ersten Verstelleinrichtung ist. Somit sind keine zusätzlichen Bauteile für das Arretiermittel erforderlich. Die Schlitze können zudem günstig durch zerspanende Verfahren oder auch durch eine Spritzgussform eingebracht werden. Besonders vorteilhafter Weise werden die Enden der Schlitze mit Einführschrägen versehen, damit die Schlitze ohne zu verkanten mit einem weiteren Arretiermittel in Eingriff gebracht werden können.

Weiterhin sieht die Erfindung in einer Variante vor, dass das weitere Arretiermittel axialfest und radialfest an der Basis angeordnet ist. Das Arretiermittel könnte beispielsweise ein in ein Loch der Basis eingesetzter Bolzen oder Stift sein. Eine derartige Gestaltung verursacht minimale Kosten. Es könnte jedoch auch einteilig mit der Basis ausgeführt sein, z.B. als Steg/Rippe. Durch eine mögliche Ausgestaltung des Arretiermittels und der ersten Verstelleinrichtung aus Metall sind eine lange Lebensdauer und eine hohe Präzision der Raststufen darstellbar.

Spezielle Vorteile ergeben sich auch, wenn zwischen der Basis und der ersten Verstelleinrichtung mittelbar oder unmittelbar ein Vorrastgetriebe ausgebildet ist. Bei einer mittelbaren Ausbildung würde der Kraftfluss auch über dritte Teile erfolgen.

Das Vorrastgetriebe vermittelt ein gutes Gefühl für den Drehwinkel, da der Schütze die Vorrastpunkte spürt. Insbesondere im Dunkeln kann die erste Verstelleinrichtung viel schneller in die gewünschte Position bewegt werden, indem die Vorrastpunkte vom Schützen mitgezählt werden.

Eine konstruktive Ausgestaltung könnte derart sein, dass das Vorrastgetriebe aus einem Vorrastmittel und korrelierenden Vertiefungen besteht, wobei das Vorrastmittel bevorzugt eine federnd gelagerte Kugel ist. Das Vorrastmittel könnte auch eine Erhebung/Nase sein. Eine federnd gelagerte Kugel bietet jedoch deutliche Vorteile hinsichtlich des Bedienkomforts. Insbesondere ändern sich bei einer solchen die Stellkräfte über die Lebensdauer nicht wesentlich und es wird eine lange Lebensdauer erreicht. Üblicherweise sitzt eine solche Kugel in einem Loch auf einer Feder und ragt einseitig über einen Rand. Auf dieser Seite werden die Vertiefungen korrelierend angeordnet. Sofern die Kugel in einer solchen Vertiefung positioniert ist, ist die Drehbarkeit der ersten Verstelleinrichtung gehemmt. Das heißt, es muss eine kleine Kraft überwunden werden, um diese zu verdrehen. Ob das Vorrastmittel oder aber die Kugel mit der ersten Verstelleinrichtung gedreht wird ist auslegbar.

In einer Auslegungsform ist hierfür vorgesehen, dass das Vorrastmittel zwischen der Basis und der drehbaren aber axialfesten Führungshülse angeordnet ist. Auf diese Weise muss das Vorrastmittel keine axialen Verschiebungen ausgleichen und kann klein gestaltet werden. Insbesondere kann die federnde Kugel dabei axial beweglich und rotationsfest zur Basis angeordnet und die Vertiefungen an der Führungshülse ausgebildet sein. Wenn die Vertiefungen einteilig mit der Führungshülse ausgebildet sind, verursacht das Vorrastgetriebe nur sehr geringe Kosten.

Äußerst Vorteilhaft ist es, wenn die Arretiermittel und das Vorrastmittel hinsichtlich des Drehwinkels korrelieren. Somit kann die erste Verstelleinrichtung in den Vorraststellungen durch eine axiale Bewegung und ohne zu haken oder zu verkanten in die Sicherungsposition gebracht werden. Ein hochwertiger Bedienkomfort wird so ohne steigende Herstellkosten erreicht.

Es ist weiterhin von Vorteil, wenn der Durchmesser der ersten Verstelleinrichtung kleiner ist als der Durchmesser der zweiten Verstelleinrichtung. So sind auch im Dunkeln die beiden Verstelleinrichtung klar abgesetzt und ertastbar.

Vorzugsweise erfolgen alle mechanischen Bewegungen im Verstellturm gedämpft. Hierfür kann eine geeignete Schmierung genutzt werden, oder es werden zusätzliche Dämpfelemente verbaut. Dies erhöht zum einen das Qualitätsempfinden und zum anderen werden so Geräusche reduziert, die zum Beispiel Wild vertreiben könnten.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen erfindungsgemäßen Verstellturm mit einer ersten Verstelleinrichtung in Verstellposition;
- Fig. 2: einen erfindungsgemäßen Verstellturm mit einer ersten Verstelleinrichtung in Sicherungsposition;
- Fig. 3: eine Explosionszeichnung der wesentlichen Bauteile eines erfindungsgemäßen Verstellturms;
- Fig. 4: eine Detailansicht der erfindungsgemäßen ersten Verstelleinrichtung; und
- Fig. 5: einen Schnitt durch einen erfindungsgemäßen Verstellturm.

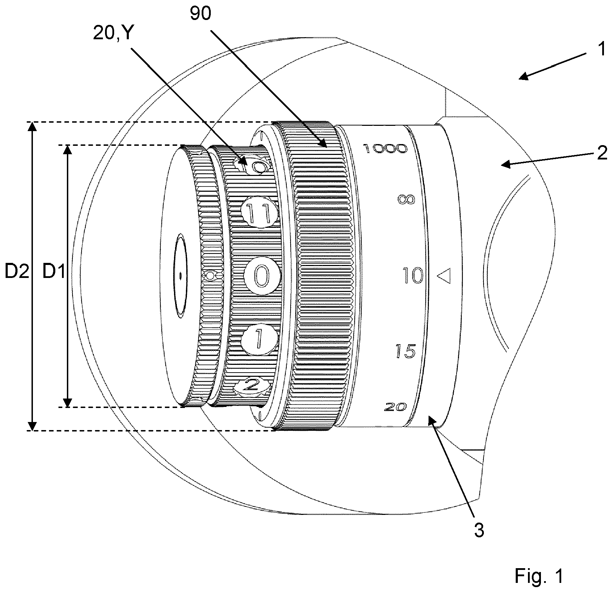

In **Figur 1** ist eine Ansicht eines an einem Zielfernrohre 2 angeordneten erfindungsgemäßen Verstellturms 1 zu sehen. Dieser besteht aus einer ersten Verstelleinrichtung 20 einer zweiten Verstelleinrichtung 90, die relativ zu einer mit dem Zielfernrohr 2 verbundenen Basis 3, unabhängig von einander drehbar sind. Der Durchmesser D1 der ersten Verstelleinrichtung 20 ist dabei kleiner als der Durchmesser D2 der zweiten Verstelleinrichtung 90. Weiterhin befindet sich die erste Verstelleinrichtung in einer Verstellposition Y.

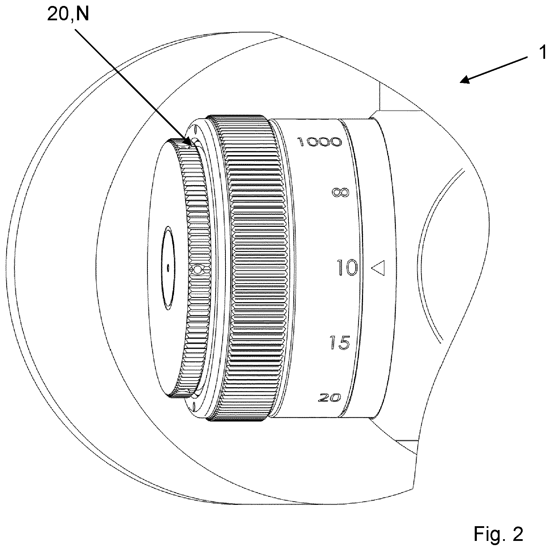

**Figur 2** zeigt einen erfindungsgemäßen Verstellturm 1 mit einer in Sicherungsposition N befindlichen ersten Verstelleinrichtung 20.

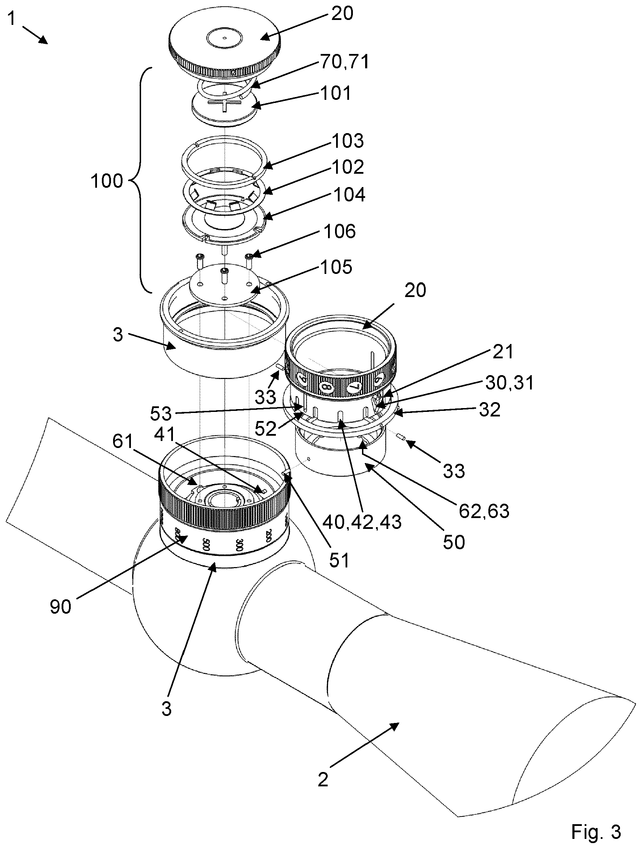

**Figur 3** zeigt eine Explosionszeichnung der wesentlichen Bauteile eines erfindungsgemäßen Verstellturms 1. Ein Zielfernrohr 2 ist zunächst mit einer Basis 3 für eine erste Verstelleinrichtung 20 und eine im Kern hohle zweite Verstelleinrichtung 90 verbunden. Beide sind unabhängig von einander relativ zur Basis 3 drehbar. Dabei dient die erste Verstelleinrichtung 20 einer Leuchtstärkenverstellung und die zweite Verstelleinrichtung 90 einer Verstellung einer Optik im Zielfernrohr 2. Aus Montage- und Fertigungsgründen ist die Basis 3 mehrteilig ausgeführt.

Die erste Verstelleinrichtung 20 ist zweiteilig ausgeführt, insbesondere hat sie einen separaten aufdrehbaren Deckel.

Zwischen dem Deckel und der Basis 3 ist als Kraftspeicher 70 eine Feder 71 angeordnet. Die Feder 71 dient dabei hauptsächlich der Ausübung einer axialen Kraft auf die erste Verstelleinrichtung von einer Sicherungsposition in Richtung einer Verstellposition. Zusätzlich fixiert sie eine Batterie 101. Letztere wird weiterhin mittels eines Klemmrings 102 und eines Fixierrings 103 gemeinsam mit einer Potentiometer-Oberteil 104 axialfest und rotationsfest mit der Führungshülse 50 verbunden. Durch Aufschrauben des Deckels ist die Batterie 102 aus dem Verstellturm 1 entnehmbar. Vorzugsweise ragt der Deckel in einer Sicherungsposition gerade noch soweit aus der zweiten Verstelleinrichtung 90 heraus, dass er mit der Hand aufgeschraubt werden kann. In dieser Position ist der Rest der ersten Verstelleinrichtung 20 fixiert und dreht sich beim Lösen der Deckelverschraubung nicht mit.

Außerdem weist die erste Verstelleinrichtung 20 eine Hülle 21 auf, in die mehrere Funktionselemente integriert sind. Hierzu gehören unter anderem ein als Rille 31 ausgebildetes Koppelmittel und ein in axialer Richtung verlaufender Führungsschlitz 53 mit nach oben und unten geschlossenen Enden, die als Hubbegrenzung 52 dienen.

Eine Führungshülse 50 ist in zusammengebauten Zustand innerhalb der Hülle 21 angeordnet und hat ein Führungselement 51 mit der Form eines Stiftes oder Bolzens, der mit dem Führungsschlitz 53 in Eingriff bringbar ist. Somit sind das Führungselement 51 und die erste Verstelleinrichtung 20 derart gekoppelt, dass die Führungshülse 50 relativ zur ersten Verstelleinrichtung 20 axial bis zum Anschlag der Hubbegrenzungen 52 verschiebbar und radial nicht drehbar ist. Es könnten hierbei auch mehrere derartige Kopplungen am Umfang der Hülle 21 angeordnet sein.

Ferner ist die Führungshülse 50 radial drehbar und axialfest relativ zur Basis 3 gelagert. Somit ist auch die erste Verstelleinrichtung 20 relativ zur Basis 3 drehbar und gegen die Kraft der Feder 71 von einer weiter aus der zweiten Verstelleinrichtung 90 herausragenden in eine weniger weit aus dieser herausragende Position überführbar. Letztere könnte auch eine komplette Versenkung in der zweiten Verstelleinrichtung 90 sein.

Damit die Verdrehung der ersten Verstelleinrichtung 20 gefühlvoll und definiert vorgenommen werden kann, ist an der Führungshülse 50 ein Vorrastgetriebe 62 angeordnet. Dieses ist derart ausgebildet, dass in der Führungshülse 50 Vertiefungen 63 vorhanden sind, in die eine an der Basis 3 federnd gelagerte Kugel 61 eingreifen kann. Sofern die Kugel 61 in der Vertiefung 63 positioniert ist, wird die Verdrehung der ersten Verstelleinrichtung 20 gehemmt. Vorzugsweise ist das Vorrastgetriebe 62 bei einer Positionierung der Kugel 61 zwischen den Vertiefungen 63 nicht selbsthemmend, sodass die erste Verstelleinrichtung 20 nicht in einer Zwischenstellung verharrt, sondern in eine der vorgesehenen Vorrastpositionen strebt.

Als weiteres wesentliches Bauteil wird ein Ring 32 um die Hülle 21 angeordnet. Ein an dem Ring 32 angeordnetes Koppelmittel ist eine Getriebeführung 33. Diese ist in Form eines Stiftes oder Bolzens ausgeführt und greift in die Rille 31 ein, wodurch ein Kurvengetriebe 30 gebildet ist. Auf diese Weise werden die erste Verstelleinrichtung 20 und der Ring 32 derart gekoppelt, dass sie im Rahmen des Kurvengetriebes 30 relativ zueinander beschränkt radial drehbar und beschränkt axial verschiebbar sind. Der Ring 32 ist weiterhin axialfest und drehbar relativ zur Basis 3 gelagert.

Bei einer axialen Verschiebung der ersten Verstelleinrichtung 20 wird diese mittels des Vorrastgetriebes 62 gegen Rotation gehemmt. Der Ring 32 hingegen wird hierdurch über das Kurvengetriebe 30 zu definierten Rotationsbewegungen gezwungen.

Weiterhin ist an der Hülle 21 ein Arretiermittel 40 vorgesehen. Dieses besteht aus Schlitzen 43, die verschiedene Raststufen 42 bilden. In einer Sicherungsposition steht dieses Arretiermittel 40 mit einem an der Basis gelagerten Arretiermittel 41 derart in Eingriff, dass eine Verdrehung der ersten Verstelleinrichtung 20 relativ zur Basis 3 nicht möglich ist.

Das Kurvengetriebe 30 ist hierbei derart ausgelegt, dass die erste Verstelleinrichtung 20 von einer Verstellposition, in der diese deutlich aus der zweiten Verstelleinrichtung 90 herausragt, durch axiale Kraftaufbringung gegen die Kraft der Feder 71 in die Sicherungsposition überführbar ist. Dabei ist sowohl die Verstellposition als auch die Sicherungsposition aufgrund der Geometrie der Rille 31 selbsthemmend. Bei erneuter axialer Kraftaufbringung gegen die Kraft der Feder 71 und anschließende Entlastung bewegt sich die erste Verstelleinrichtung 20 wieder in die Verstellposition.

Neben der Batterie 101, dem Klemmring 102, dem Fixierring 103 und dem Potentiometer-Oberteil 104, die sich mit der ersten Verstelleinrichtung 20 mitdrehen, wird eine Elektronikeinheit 100 von einem mittels Schrauben 106 drehfest und axialfest mit der Basis 3 in Verbindung stehenden Potentiometer-Unterteil 105 komplettiert. Durch eine relative Verdrehung von Potentiometer-Oberteil 104 zum Potentiometer-Unterteil 105 verändert sich der elektrische Widerstand des Potentiometers. Entsprechend dieses Widerstandes ergibt sich eine Leuchtstärke einer mit dem Verstellturm 1 elektrisch verbundenen Leuchteinheit. Um geeignete Leuchtstärken einstellen zu können, korreliert deshalb der Widerstand mit den Arretiermitteln (40,41), bzw. den Raststufen 42.

Es kann weiterhin vorgesehen sein, dass der Stromfluss zwischen zwei Raststufen komplett unterbrochen wird, indem zwischen zwei Vorrastpunkten des Vorrastgetriebes 62, bei denen Strom fließt, ein Vorrastpunkt mit unendlich großem Widerstand angeordnet ist. Hiermit wird eine sehr schnelle Aktivierung und Deaktivierung ermöglicht, da der Drehwinkel zwischen Aktivierung und Deaktivierung sehr klein ist.

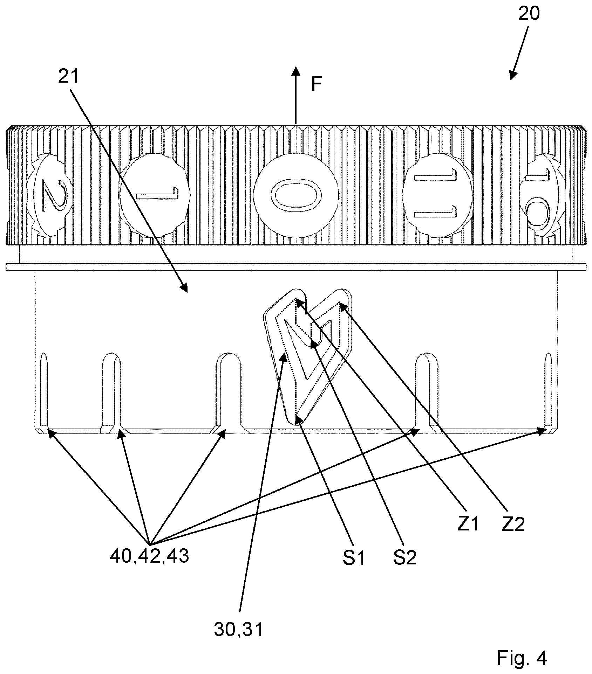

**Figur 4** zeigt eine Detailansicht einer erfindungsgemäßen Verstelleinrichtung 20 ohne Deckel. In einer Hülle 21 der ersten Verstelleinrichtung 20 befindet sich ein Arretiermittel 40, das durch nach unten geöffnete Schlitze 43 mit Einführschrägen ausgebildet ist. Die Einführschrägen egalisieren Toleranzungenauigkeiten und ermöglichen eine harmonische nicht hakende Betätigung der ersten Verstelleinrichtung 20 bei einer Überführung von einer Verstellposition in eine Sicherungsposition. Jeder der Schlitze 43 kann mit einem weiteren Arretiermittel in Eingriff gebracht werden und definiert auf diese Weise eine Raststufe 42, z.B. für die Beleuchtungsstärke.

Weiterhin ist in der Hülle 21 eine Rille 31 integriert. Diese dringt nicht durch die Hülle 21 hindurch, da ein Kern im Zentrum der Rille 31 erforderlich ist. Die Rille 31 beschreibt einen geschlossenen Pfad und definiert eine erste Endstellung S1 und eine zweite Endstellung S2. Zwischen diesen Endstellungen S1,S2 liegen auf einer ersten Verbindungsstrecke eine erste Zwischenposition Z1 und auf einer zweiten Verbindungsstrecke eine zweite Zwischenposition Z2. Sofern eine radial bewegbare und axialfeste Getriebeführung 33 mit der Rille 31 gekoppelt ist wird ein Kurvengetriebe 30 gebildet. Bei einer ersten Endstellung S1 entspricht dies einer Verstellposition der ersten Verstelleinrichtung 20. Bei einer axialen Bewegung der ersten Verstelleinrichtung 20 nach unten entgegen einer Kraft F, wird die Getriebeführung 33 zunächst in die Zwischenposition Z1 überführt. Entlastet der Schütze nunmehr die erste Verstelleinrichtung 20, bewegt die Kraft F die Getriebeführung 33 in die zweite Endstellung S2. Diese korreliert mit einer Sicherungsposition der ersten Verstelleinrichtung 20, bei der die Arretiermittel 40 mit einem weiteren Arretiermittel in Eingriff stehen. Bei einer erneuten Betätigung durch eine Bewegung entgegen der Kraft F, wird die Getriebeführung 33 in die zweite Zwischenposition Z2 überführt. Nach Entlastung bewegt die Kraft F die Getriebeführung 33 zurück in die erste Endstellung S1 und der Schütze kann z.B. die Beleuchtungsstärke durch Verdrehen der ersten Verstelleinrichtung 20 verändern.

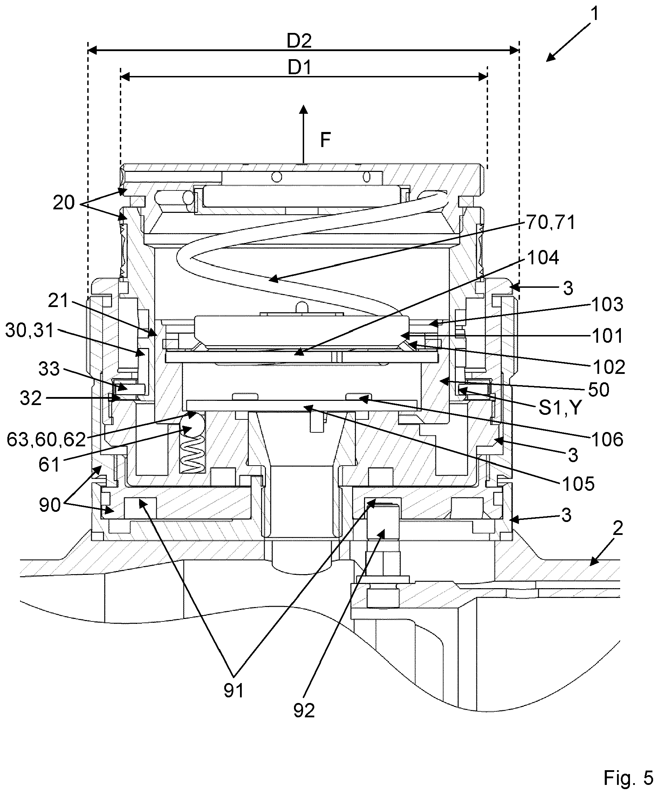

**Figur 5** ist ein Schnitt durch einen erfindungsgemäßen Verstellturm 1 mit einer ersten Verstelleinrichtung 20 und einer zweiten Verstelleinrichtung 90.

Ein Zielfernrohr 2 ist zunächst mit einer Basis 3 für die erste Verstelleinrichtung 20 und die zweiten Verstelleinrichtung 90 verbunden. An dieser Basis 3 ist die im Kern hohle zweite Verstelleinrichtung 90 drehbar gelagert. Die zweite Verstelleinrichtung 90 kann durch Verdrehung mittels einer vorgesehenen Spiralnut 91 einen mit dieser gekoppelten Verstellbolzen 92 verschieben. Hierdurch erfolgt eine mechanische Verstellung der Optik des Zielfernrohrs 2. Diese könnte der Parallaxe- oder seitlichen Einstellung entsprechen.

Oberhalb und im Kern der zweiten Verstelleinrichtung 90 ist die erste Verstelleinrichtung 20 dargestellt, die der Verstellung einer Beleuchtungsstärke dient. An dieser sind unter anderem ein Ring 32 und eine Führungshülse 50 angeordnet. Dabei hat die erste Verstelleinrichtung 20 einen Durchmesser D1, der kleiner ist als ein Durchmesser D2 der zweiten Verstelleinrichtung 90.

Die erste Verstelleinrichtung 20 ist zweiteilig ausgeführt, insbesondere hat sie einen separaten aufdrehbaren Deckel. Zwischen diesem Deckel und der Basis 3 ist als Kraftspeicher 70 eine Feder 71 angeordnet. Diese übt eine Kraft F auf die erste Verstelleinrichtung 20 aus und dient weiterhin der Fixierung einer Batterie 101. Letztere ist zusätzlich mittels eines Klemmrings 102 und eines Fixierrings 103 gemeinsam mit einer Potentiometer-Oberteil 104 axialfest und rotationsfest mit der Führungshülse 50 verbunden. Durch Aufschrauben und Abnehmen des Deckels samt Feder 71 ist die Batterie 102 aus dem Verstellturm 1 entnehmbar.

Weiterhin weist die erste Verstelleinrichtung 20 eine Hülle 21 auf, in die mehrere Funktionselemente integriert sind. Dargestellt sind unter anderem zwei auf gegenüber liegenden Seiten angeordnete Koppelmittel als Rillen 31. Innerhalb dieser Hülle 21 ist die Führungshülse 50 angeordnet und derart mit der ersten Verstelleinrichtung 20 gekoppelt, dass die Führungshülse 50 relativ zur ersten Verstelleinrichtung 20 beschränkt axial verschiebbar und radial nicht drehbar ist. Hierdurch dreht sich auch die Feder 71 immer mit der Führungshülse 50 und der ersten Verstelleinrichtung 20 mit.

Ferner ist die Führungshülse 50 radial drehbar und axialfest relativ zur Basis 3 gelagert. Somit ist auch die erste Verstelleinrichtung 20 relativ zur Basis 3 drehbar und gegen die Kraft F der Feder 71 von einer weiter aus der zweiten Verstelleinrichtung 90 herausragenden in eine weniger weit aus dieser herausragende Position überführbar. Letztere könnte auch eine komplette Versenkung in der zweiten Verstelleinrichtung 90 sein.

Damit die Verdrehung der ersten Verstelleinrichtung 20 gefühlvoll und definiert vorgenommen werden kann, ist zwischen der Basis 3 und der Führungshülse 50 ein Vorrastgetriebe 62 vorgesehen. Dieses besteht aus einem Vorrastmittel 60 und Vertiefungen 63 an der Führungshülse 50. In diese Vertiefungen 63 greift das Vorrastmittel 60 ein, das als eine an der Basis 3 federnd gelagerte Kugel 61 ausgebildet ist. Sofern die Kugel 61 in einer der Vertiefungen 63 positioniert ist, wird die Verdrehung der ersten Verstelleinrichtung 20 gehemmt. Vorzugsweise ist das Vorrastgetriebe 62 bei einer Positionierung der Kugel 61 zwischen zwei Vertiefungen 63 nicht selbsthemmend, sodass die erste Verstelleinrichtung 20 nicht in einer Zwischenstellung verharrt. Stattdessen sollte es in eine der vorgesehenen Vorrastpositionen streben - insbesondere die Kugel 61 in eine der Vertiefungen 63, durch Verdrehung der ersten Verstelleinrichtung 20.

Sofern auch eine Vorrastung für die zweite Verstelleinrichtung 90 vorgesehen werden soll, kann die Bohrung, in der die Feder 71 sitzt, durchgängig gestaltet werden. Auf beiden Seiten der Feder 71 müsste dann eine Kugel 61 angeordnet werden. Zusätzlich wären Vertiefungen in die zweite Verstelleinrichtung 90 einzubringen, die mit der zweiten Kugel korrespondieren.

Der Ring 32 wiederum ist um die Hülle 21 angeordnet. Eine mit dem Ring 32 verbundene und als Koppelmittel ausgebildete Getriebeführung 33 in Form eines Stiftes oder Bolzens greift in die Rille 31 ein und bildet so ein Kurvengetriebe 30. Auf diese Weise werden erste Verstelleinrichtung 20 und Ring 32 derart gekoppelt, dass diese im Rahmen des Kurvengetriebes 30 relativ zueinander beschränkt radial drehbar und beschränkt axial verschiebbar sind. Der Ring 32 ist weiterhin derart relativ zur Basis 3 gelagert, dass er axialfest und drehbar zu dieser ist.

Bei einer axialen Verschiebung der ersten Verstelleinrichtung 20 wird diese mittels des Vorrastgetriebes 62 gegen Rotation gehemmt. Der Ring 32 hingegen wird hierdurch über das Kurvengetriebe 30 zu definierten Rotationsbewegungen gezwungen.

In der gezeigten Ansicht befindet sich das Kurvengetriebe 30 in einer ersten Endstellung S1, die mit einer Verstellposition Y der ersten Verstelleinrichtung 20 korreliert. Somit ist letztere in der gezeigten Ansicht drehbar.

Zur Einstellung der Leuchtstärke ist neben der Batterie 101, dem Klemmring 102, dem Fixierring 103 und dem Potentiometer-Oberteil 104, die sich mit der Verstelleinrichtung 20 mitdrehen, ein mittels Schrauben 106 drehfest und axialfest mit der Basis 3 in Verbindung stehendes Potentiometer-Unterteil 105 vorhanden. Durch eine relative Verdrehung von Potentiometer-Oberteil 104 und Potentiometer-Unterteil 105 verändert sich der elektrische Widerstand des Potentiometers. Entsprechend dieses Widerstandes ergibt sich eine Leuchtstärke einer mit dem Verstellturm 1 elektrisch verbundenen Leuchteinheit.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| 1 | Verstellturm | 70 | Kraftspeicher |
| 2 | Zielfernrohr | 71 | Feder |
| 3 | Basis | | |
| | | 90 | Zweite Verstelleinrichtung |
| 20 | Erste Verstelleinrichtung | 91 | Spiralnut |
| 21 | Hülle | 92 | Verstellbolzen |
| | | | |
| 30 | Kurvengetriebe | 100 | Elektronikeinheit |
| 31 | Rille | 101 | Batterie |
| 32 | Ring | 102 | Klemmring |
| 33 | Getriebeführung | | Fixierring |
| | | 104 | Potentiometer-Oberteil |
| 40 | Arretiermittel | 105 | Potentiometer-Unterteil |
| 41 | Arretiermittel | 106 | Schrauben |
| 42 | Raststufe | | |
| 43 | Schlitz | D1 | Durchmesser |
| | | D2 | Durchmesser |
| 50 | Führungshülse | | |
| 51 | Führungselement | F | Kraft |
| 52 | Hubbegrenzung | | |
| 53 | Führungsschlitz | Y | Verstellposition |
| | | N | Sicherungsposition |
| 60 | Vorrastmittel | S1 | erste Endstellung |
| 61 | Kugel | S2 | zweite Endstellung |
| 62 | Vorrastgetriebe | | |
| 63 | Vertiefungen | | |

## Patentansprüche

1. Verstellturm (1) für Zielfernrohre (2) bestehend aus einer ersten Verstelleinrichtung (20) und einer zweiten Verstelleinrichtung (90), die relativ zu einer Basis (3) unabhängig voneinander drehbar sind, wobei die erste Verstelleinrichtung (20) in einer Verstellposition (Y) drehbar ist und eine gegen Verdrehung gesicherte Sicherungsposition (N) aufweist, wobei die erste Verstelleinrichtung (20) in der Sicherungsposition (N) über Arretiermittel (40,41) mit der Basis (3) in Eingriff steht, und die erste Verstelleinrichtung (20) relativ zur Basis (3) derart beschränkt axial bewegbar ist, dass diese in der Verstellposition (Y) weiter aus der zweiten Verstelleinrichtung (90) herausragt, als in der Sicherungsposition (N), wobei ein Kraftspeicher (70) eine axiale Kraft (F) auf die erste Verstelleinrichtung (20) von der Sicherungsposition (N) in Richtung der Verstellposition (Y) ausübt,
• wobei Koppelmittel in der Sicherungsposition (N) in Eingriff stehen und vom Kraftspeicher (70) kraftbeaufschlagt sind,
• wobei die Koppelmittel in der Verstellposition (Y) in Eingriff stehen und vom Kraftspeicher (70) kraftbeaufschlagt sind,
• wobei die Koppelmittel ein derart ausgebildetes Kurvengetriebe (30) bilden, dass bei Überwindung einer Grenzkraft auf die erste Verstelleinrichtung (20) entgegen der Kraft (F) und anschließender Kraftentlastung, der Kraftspeicher (70) das Kurvengetriebe (30) in eine Endstellung (S1,S2) bewegt und dort fixiert,
• wobei das Kurvengetriebe (30) derart ausgebildet ist, dass bei dem Vorliegen einer Verstellposition (N) und einer Überwindung einer Grenzkraft auf die erste Verstelleinrichtung (20) entgegen der Kraft (F) und anschließender Kraftentlastung, der Kraftspeicher (70) die erste Verstelleinrichtung (20) in die Sicherungsposition (Y) bewegt und dort fixiert und
• wobei das Kurvengetriebe (30) derart ausgebildet ist, dass bei dem Vorliegen einer Sicherungsposition (Y) und einer Überwindung einer Grenzkraft auf die erste Verstelleinrichtung (20) entgegen der Kraft (F) und anschließender Kraftentlastung, der Kraftspeicher (70) die erste Verstelleinrichtung (20) in die Verstellposition (N) bewegt und dort fixiert.

2. Verstellturm (1) nach Anspruch 1, **dadurch gekennzeichnet, dass** das Kurvengetriebe (30) an der ersten Verstelleinrichtung (20) angeordnet ist.

3. Verstellturm (1) nach einem der Ansprüche 1 oder 2, **dadurch gekennzeichnet, dass** das Kurvengetriebe (30) als Koppelmittel eine Rille (31) aufweist.

4. Verstellturm (1) nach Anspruch 3, **dadurch gekennzeichnet, dass** das Kurvengetriebe (30) als Koppelmittel eine mit einem Ring (32) verbundene Getriebeführung (33) aufweist, wobei der Ring (32) derart an der ersten Verstelleinrichtung (20) gelagert ist, dass die Getriebeführung (33) in die Rille (31) eingreift und den Ring (32) kinematisch mit der ersten Verstelleinrichtung (20) verbindet, sodass der Ring (32) und die erste Verstelleinrichtung (20) relativ zueinander beschränkt drehbar und beschränkt axial verschiebbar sind, und wobei der Ring (32) radial drehbar und axialfest relativ zur Basis (3) gelagert ist.

5. Verstellturm (1) nach einem der vorhergehenden Ansprüche, **dadurch gekennzeichnet, dass** die erste Verstelleinrichtung (20) über ein Führungselement (51) mit einer Führungshülse (50) derart gekoppelt ist, dass die Führungshülse (50) relativ zur ersten Verstelleinrichtung (20) axial verschiebbar und radial nicht drehbar ist, wobei die Führungshülse (50) radial drehbar und axialfest relativ zur Basis (3) gelagert ist.

6. Verstellturm (1) nach einem der vorhergehenden Ansprüche, **dadurch gekennzeichnet, dass** das Arretiermittel (40) Raststufen (42) hat.

7. Verstellturm (1) nach einem der vorhergehenden Ansprüche, **dadurch gekennzeichnet, dass** das Arretiermittel (40) wenigstens ein einseitig geöffneter Schlitz (43) in der ersten Verstelleinrichtung (20) ist.

8. Verstellturm (1) nach einem der vorhergehenden Ansprüche, **dadurch gekennzeichnet, dass** das Arretiermittel (41) axialfest und radialfest an der Basis (3) angeordnet ist.

9. Verstellturm (1) nach einem der vorhergehenden Ansprüche, **dadurch gekennzeichnet, dass** zwischen der Basis (3) und der ersten Verstelleinrichtung (20) mittelbar oder unmittelbar ein Vorrastgetriebe (62) ausgebildet ist.

10. Verstellturm (1) nach Anspruch 9, **dadurch gekennzeichnet, dass** das Vorrastgetriebe (62) aus einem Vorrastmittel (60) und korrelierenden Vertiefungen (61) besteht, wobei das Vorrastmittel (60) bevorzugt eine federnd gelagerte Kugel (61) ist.

## Claims

1. Adjusting turret (1) for telescopic sights (2) comprising a first adjusting mechanism (20) and a second adjusting mechanism (90), which can be rotated independently of each other relative to a base (3), wherein the first adjusting mechanism (20) can be rotated in an adjusting position (Y) and has a securing position (N) secured against rotation, wherein, in the securing position (N), the first adjusting mechanism (20) is engaged with the base (3) by way of locking means (40,41), and the first adjusting mechanism (20) can be axially moved to a limited extent relative to the base (3) in such a way that, in the adjusting position (Y), it projects further out of the second adjusting mechanism (90) than in the securing position (N), wherein an energy store (70) exerts an axial force (F) on the first adjusting mechanism (20) from the securing position (N) in the direction of the adjusting position (Y),
• wherein coupling means are engaged in the securing position (N) and are subject to a force from the energy store (70),
• wherein the coupling means are engaged in the adjusting position (Y) and are subject to a force from the energy store (70),
• wherein the coupling means form a cam gear (30) designed in such a way that when a limit force is overcome on the first adjusting mechanism (20) counter to the force (F) and with a subsequent release of force, the energy store (70) moves the cam gear (30) into an end position (S1, S2) and fixes it there,
• wherein the cam gear (30) is designed in such a way that when an adjusting position (N) exists, and a limit force is overcome on the first adjusting mechanism (20) counter to the force (F) and with a subsequent release of force, the energy store (70) moves the first adjusting mechanism (20) into the securing position (Y) and fixes it there, and
• wherein the cam gear (30) is designed in such a way that when a securing position (Y) exists and a limit force is overcome on the first adjusting mechanism (20) counter to the force (F) and with a subsequent release of force, the energy store (70) moves the first adjusting mechanism (20) into the adjusting position (N) and fixes it there.

2. Adjusting turret (1) according to claim 1, **characterised in that** the cam gear (30) is arranged on the first adjusting mechanism (20).

3. Adjusting turret (1) according to any one of claims 1 or 2, **characterised in that** the cam gear (30) has a groove (31) as the coupling means.

4. Adjusting turret (1) according to claim 3, **characterised in that** the cam gear (30) has a gear guide (33) connected to a ring (32) as the coupling means, wherein the ring (32) is mounted on the first adjusting mechanism (20) in such a way that the gear guide (33) engages in the groove (31) and kinematically connects the ring (32) to the first adjusting mechanism (20) such that the ring (32) and the first adjusting mechanism (20) can be rotated to a limited extent and axially displaced to a limited extent relative to each other, and wherein the ring (32) is mounted so it can be radially rotated and is axially fixed relative to the base (3).

5. Adjusting turret (1) according to any one of the preceding claims, **characterised in that** the first adjusting mechanism (20) is coupled to a guide sleeve (50) by way of a guide element (51) in such a way that the guide sleeve (50) is axially displaceable and is radially non-rotatable relative to the first adjusting mechanism (20), wherein the guide sleeve (50) is mounted so it can be radially rotated and is axially fixed relative to the base (3).

6. Adjusting turret (1) according to any one of the preceding claims, **characterised in that** the locking means (40) has notches (42).

7. Adjusting turret (1) according to any one of the preceding claims, **characterised in that** the locking means (40) is at least one slot (43) that is open on one side in the first adjusting mechanism (20).

8. Adjusting turret (1) according to any one of the preceding claims, **characterised in that** the locking means (41) is arranged so as to be axially fixed and radially fixed on the base (3).

9. Adjusting turret (1) according to any one of the preceding claims, **characterised in that** a pre-latching gear (62) is formed indirectly or directly between the base (3) and the first adjusting mechanism (20).

10. Adjusting turret (1) according to claim 9, **characterised in that** the pre-latching gear (62) comprises a pre-latching means (60) and correlating indentations (61), wherein the pre-latching means (60) is preferably a resiliently mounted ball (61).

## Revendications

1. Tour de réglage (1) pour lunettes de visée (2) constitué d'un premier dispositif de réglage (20) et d'un second dispositif de réglage (90), qui peuvent tourner indépendamment l'un de l'autre par rapport à une base (3), dans laquelle le premier dispositif de réglage (20) peut tourner en position de réglage (Y) et présente une position d'arrêt bloquée en rotation (N), dans laquelle le premier dispositif de réglage (20) vient en prise avec la base (3) en position d'arrêt (N) via des moyens d'arrêt (40, 41) et le premier dispositif de réglage (20) peut être déplacé axialement de manière limitée par rapport à la base (3) en sorte que celui-ci, en position de réglage (Y), dépasse du second dispositif de réglage (90) plus loin qu'en position d'arrêt (N), dans laquelle un accumulateur de force (70) exerce une force axiale (F) sur le dispositif de réglage (20) de la position d'arrêt (N) dans la direction de la position de réglage (Y),
• dans laquelle des moyens de couplage sont mis en prise en position d'arrêt (N) et sont sollicités par l'accumulateur de force (70),
• dans laquelle les moyens de couplage sont mis en prise en position de réglage (Y) et sont sollicités par l'accumulateur de force (70),
• dans laquelle les moyens de couplage forment une commande à cames (30) conçue en sorte que, lors du dépassement d'une force limite sur le premier dispositif de réglage (20) à l'encontre de la force (F) et de la détente de force qui s'ensuit, l'accumulateur de force (70) déplace la commande à cames (30) en position finale (S1, S2) et l'y fixe,
• dans laquelle la commande à cames (30) est conçue en sorte que, en présence d'une position de réglage (N) et d'un dépassement d'une force limite sur le premier dispositif de réglage (20) à l'encontre de la force (F) et d'une détente de force qui s'ensuit, l'accumulateur de force (70) déplace le premier dispositif de réglage (20) en position d'arrêt (Y) et l'y fixe et
• dans laquelle la commande à cames (30) est conçue en sorte que, en présence d'une position d'arrêt (Y) et d'un dépassement d'une force limite sur le premier dispositif de réglage (20) à l'encontre de la force (F) et d'une détente de force qui s'ensuit, l'accumulateur de force (70) déplace le premier dispositif de réglage (20) en position de réglage (N) et l'y fixe.

2. Tour de réglage (1) selon la revendication 1, **caractérisée en ce que** la commande à cames (30) est agencée sur le premier dispositif de réglage (20).

3. Tour de réglage (1) selon la revendication 1 ou 2, **caractérisée en ce que** la commande à cames (30) présente comme moyens de couplage une cannelure (31).

4. Tour de réglage (1) selon la revendication 3, **caractérisée en ce que** la commande à cames (30) présente comme moyens de couplage une commande de transmission (33) reliée à une bague (32), dans laquelle la bague (32) est montée sur le premier dispositif de réglage (20) en sorte que la commande de transmission (33) s'engage dans la cannelure (31) et relie la bague (32) au premier dispositif de réglage (20) de manière cinématique de sorte que la bague (32) et le premier dispositif de réglage (20) puissent tourner de manière limitée l'un(e) par rapport à l'autre et puissent être déplacés axialement de manière limitée, et dans laquelle la bague (32) est montée de manière solidaire en rotation radialement et de manière solidaire axialement par rapport à la base (3).

5. Tour de réglage (1) selon l'une quelconque des revendications précédentes, **caractérisée en ce que** le premier dispositif de réglage (20) est couplé à une douille de guidage (50) via un élément de guidage (51) en sorte que la douille de guidage (50) puisse être déplacée axialement par rapport au premier dispositif de réglage (20), mais pas tourner radialement, dans laquelle la douille de guidage (50) est montée de manière solidaire en rotation radialement et de manière solidaire axialement par rapport à la base (3).

6. Tour de réglage (1) selon l'une quelconque des revendications précédentes, **caractérisée en ce que** le moyen d'arrêt (40) présente des gradins d'encliquetage (42).

7. Tour de réglage (1) selon l'une quelconque des revendications précédentes, **caractérisée en ce que** le moyen d'arrêt (40) ait au moins une fente (43) ouverte d'un côté dans le premier dispositif de réglage (20).

8. Tour de réglage (1) selon l'une quelconque des revendications précédentes, **caractérisée en ce que** le moyen d'arrêt (41) est agencé sur la base (3) de manière solidaire axialement et solidaire radialement.

9. Tour de réglage (1) selon l'une quelconque des revendications précédentes, **caractérisée en ce qu'**une transmission de pré-encliquetage (62) est formée entre la base (3) et le premier dispositif de réglage (20) directement ou indirectement.

10. Tour de réglage (1) selon la revendication 9, **caractérisée en ce que** la transmission de pré-encliquetage (62) est constituée d'un moyen de pré-encliquetage (60) et de creux correspondants (61), dans laquelle le moyen de pré-encliquetage (60) est de préférence une sphère (61) montée de manière élastique.
